# EUROPEAN PATENT APPLICATION

(11) **EP 1 617 039 A1**
(43) Date of publication of application: **18.01.2006**
(21) Application number: 05254386.5
(22) Date of filing: 13.07.2005
(51) Int. Cl.: E21B 43/26, C09K 8/04

(54) **Brine based viscosified treatment fluids and associated methods**

(30) Priority: 13.07.2004 US 889860
(71) Applicant: HALLIBURTON ENERGY SERVICES, INC., Duncan, Oklahoma 73533 (US)
(72) Inventor: Milson, Shane L., Duncan, 73533 Oaklahoma (US); Pauls, Richard, Duncan, 73533 Oaklahoma (US)
(74) Representative: Curtis, Philip Anthony

(57) **Abstract**

The present invention relates to viscosified treatment fluids used in industrial and oil field operations, and more particularly, to brine-based viscosified treatment fluids comprising xanthan gelling agents, and their use in industrial and oil field operations. In one embodiment, the present invention provides a method of treating a portion of a subterranean formation comprising the steps of: providing a viscosified treatment fluid that comprises a brine and a gelling agent that comprises a clarified xanthan; and treating the portion of the subterranean formation. The present invention also provides methods of fracturing, gravel packing, and making viscosified treatments fluids. Also provided are viscosified treatment fluid compositions, and gelling agent compositions.

## Description

### BACKGROUND OF THE INVENTION

The present invention relates to viscosified treatment fluids used in industrial and oil field operations, and more particularly, to brine-based viscosified treatment fluids comprising xanthan gelling agents, and their use in industrial and oil field operations.

In industrial and oil field operations, viscosified treatment fluids are often used to carry particulates into subterranean formations for various purposes, e.g., to deliver particulates to a desired location within a well bore. Examples of subterranean operations that use such viscosified treatment fluids include servicing and completion operations such as fracturing and gravel packing. In fracturing, generally, a viscosified fracturing fluid is used to carry proppant to fractures within the formation, *inter alia,* to maintain the integrity of those fractures to enhance the flow of desirable fluids to a well bore. In sand control operations, *e.g.*, gravel packing operations, oftentimes a screen, slotted liner, or other mechanical device is placed into a portion of a well bore. A viscosified gravel pack fluid is used to deposit particulates often referred to as gravel into the annulus between the mechanical device and the formation or casing to inhibit the flow of particulates from a portion of the subterranean formation to the well bore.

The viscosified treatment fluids used in subterranean operations are oftentimes aqueous-based fluids comprising gelling agents that increase the viscosities of the treatment fluids, *inter alia,* to enhance the treatment fluids' sand suspension capabilities. These gelling agents are usually polysaccharides that, when hydrated and at a sufficient concentration, are capable of forming a viscous solution. A commonly used polysaccharide gelling agent is xanthan. Xanthan often is a preferred gelling agent because it provides, *inter alia,* advantageous sand transport properties, long-lasting viscosity, desirable sheer thinning characteristics, and efficient breaking properties to a viscosified treatment fluid in which it is used.

When used to make an aqueous-based viscosified treatment fluid to be used in an oilfield operation, xanthan is usually dissolved in a fresh water base fluid *(i.e.,* a water source having a very low concentration of salts if any, usually having less than 1,000 ppm of dissolved salts). For instance, a conventional method of forming a viscosified treatment fluid comprising xanthan might involve adjusting the pH of a fresh water base fluid to a level to allow good dispersion of xanthan, adding xanthan to the fresh water base fluid, raising the pH of the fluid to allow rapid hydration of the xanthan, allowing the xanthan to hydrate in the fresh water base fluid, sheering the resultant fluid, and then filtering the resultant fluid to remove any undesirable solids. Salts or other additives may be added once the xanthan has hydrated in the fresh water base fluid, e.g., to increase the density of the fluid. Salts may not be added before the xanthan is hydrated because xanthan generally cannot tolerate salts before hydration. Moreover, fresh water should be used because the presence of any appreciable level of salts in the water, *inter alia,* may prevent the xanthan from rapidly and completely hydrating, and thereby, fully viscosifying the treatment fluid. Thus, brines have been found to not be suitable as base fluids to be used in conjunction with xanthan gelling agents. The term "brine" as used herein refers to various salts and salt mixtures dissolved in aqueous fluids. Seawater is an example of a brine. The inability to use brine-based xanthan viscosified treatment fluids is problematic in the industry, especially in locations where fresh water is scarce or expensive.

Although xanthan-based viscosified treatment fluids are desirable because of their advantageous properties, in some well locations such fluids may not be used because fresh water is not easily available or is costly to obtain. An example is an off-shore well, where there is an abundance of seawater but fresh water must be brought in or produced. In other cases, such as in Angola, most fresh water sources comprise an abundance of salts. To obtain water with an acceptable level of dissolved salts, the water should be treated by a suitable process such as reverse osmosis. Another example of the problems encountered includes a case where xanthan viscosified treatment fluids are prepared at a dock and then transported to a remote well site. The entire gelation procedure generally is carried out at the dock, which is time consuming, and then any necessary salts are added to the fluid with a crane. If xanthan could be used with brines such as seawater or other salt-containing aqueous fluid that are often readily available at certain well sites, this would represent a distinct advantage, especially in locations where fresh water is difficult or costly to obtain.

### SUMMARY OF THE INVENTION

The present invention relates to viscosified treatment fluids used in industrial and oil field operations, and more particularly, to brine-based viscosified treatment fluids comprising xanthan gelling agents, and their use in industrial and oil field operations.

In one embodiment, the present invention provides a method of treating a portion of a subterranean formation comprising the steps of: providing a viscosified treatment fluid that comprises a brine and a gelling agent that comprises a clarified xanthan; and treating the portion of the subterranean formation.

In another embodiment, the present invention provides a method of treating a portion of a subterranean formation comprising: providing a viscosified treatment fluid that comprises seawater and a gelling agent that comprises a clarified xanthan; and treating the portion of the subterranean formation.

In another embodiment, the present invention provides a method of placing a gravel pack in a portion of a subterranean formation comprising: providing a viscosified gravel pack fluid that comprises gravel, a brine and a gelling agent that comprises a clarified xanthan; and contacting the portion of the subterranean formation with the viscosified gravel pack fluid so as to place a gravel pack in or near a portion of the subterranean formation.

In one embodiment, the present invention provides a method of fracturing a portion of a subterranean formation comprising: providing a viscosified fracturing fluid that comprises a brine and a gelling agent that comprises a clarified xanthan; and contacting the portion of the subterranean formation with the viscosified fracturing fluid at a sufficient pressure to create or enhance at least one fracture in the subterranean formation.

In another embodiment, the present invention provides a method of producing hydrocarbons from a subterranean formation comprising using a viscosified treatment fluid that comprises a brine and a gelling agent that comprises a clarified xanthan in a completion or a servicing operation.

In another embodiment, the present invention provides a method of producing hydrocarbons from a subterranean formation comprising using a viscosified treatment fluid that comprises a brine and a gelling agent that comprises a clarified xanthan in a completion or a servicing operation, and the subterranean formation has a bottom hole temperature of from about 30°F to about 300°F.

In another embodiment, the present invention provides a viscosified treatment fluid comprising seawater and a gelling agent that comprises a clarified xanthan.

In another embodiment, the present invention provides a subterranean treatment fluid gelling agent that comprises a clarified xanthan.

In one embodiment, the present invention provides a method of making a viscosified treatment fluid comprising the steps of: providing a brine; filtering the brine through a filter; dispersing a gelling agent that comprises a clarified xanthan into the brine with adequate sheer to fully disperse the gelling agent therein to form a brine and gelling agent mixture; mixing the brine and gelling agent mixture; allowing the clarified xanthan to fully hydrate in the brine and gelling agent mixture to form a viscosified treatment fluid; and filtering the viscosified treatment fluid.

The features and advantages of the present invention will be readily apparent to those skilled in the art upon a reading of the description of the preferred embodiments that follows.

### DESCRIPTION OF PREFERRED EMBODIMENTS

The present invention relates to viscosified treatment fluids used in industrial and oil field operations, and more particularly, to brine-based viscosified treatment fluids comprising xanthan gelling agents, and their use in industrial and oil field operations.

In certain embodiments, the present invention provides compositions and methods that are especially suitable for use in well bores comprising bottom-hole temperatures ("BHTs") from about 30°F to about 300°F. As known to one of ordinary skill in the art, the bottom hole circulating temperature may be below the BHT of the well bore, and may be reflective of the temperature of a treatment fluid during the treatment. One advantage of the present invention is that the particulate transport properties of the fluids of the present invention may be exceptional in that, in certain embodiments, the fluids can hold particulates in almost perfect suspension under static conditions for many hours to possibly days. The temperatures to which the fluids are subjected can affect their particulate transport properties, depending on the concentration of the xanthan gelling agent in the fluid as well as other components. One advantage of the many advantages of the fluids of the present invention is that they are sheer thinning fluids.

The viscosified treatment fluids of the present invention generally comprise a brine and a gelling agent that comprises a clarified xanthan. The term "clarified xanthan" as used herein means a xanthan that has not been treated, either chemically or otherwise, to affect its ability to disperse and hydrate in an aqueous fluid or hydrate at a specific pH range. In some embodiments, suitable clarified xanthans may have been treated with enzymes or the like to remove any debris from the xanthan polymer. In certain preferred embodiments, the viscosified treatment fluids of the present invention comprise seawater and a gelling agent that comprises a clarified xanthan.

The viscosified treatment fluids of the present invention may vary widely in density. One of ordinary skill in the art with the benefit of this disclosure will recognize the particular density that is most appropriate for a particular application. In certain preferred embodiments, the viscosified treatment fluids of the present invention will have a density of about 8.3 pounds per gallon ("ppg") to about 19.2 ppg. The desired density for a particular viscosified treatment fluid may depend on characteristics of the subterranean formation, including, *inter alia,* the hydrostatic pressure required to control the fluids of the subterranean formation during placement of the viscosified treatment fluids, and the hydrostatic pressure that will damage the subterranean formation. The types of salts or brines used to achieve the desired density of the viscosified treatment fluid can be chosen based on factors such as compatibility with the formation, crystallization temperature, and compatibility with other treatment and/or formation fluids. Availability and environmental impact also may affect this choice.

The gelling agents used in the viscosified treatment fluids of the present invention comprise a clarified xanthan. Suitable clarified xanthans generally exhibit pseudoplastic rheology (sheer reversible behavior). Suitable clarified xanthans also are generally soluble in hot or cold water, and are stable over a range of pHs and temperatures. Additionally, they are compatible with and stable in systems containing salts, e.g., they will fully hydrate in systems comprising salts. Moreover, suitable clarified xanthans should provide good suspension for particulates often used in subterranean applications, such as proppant or gravel. Preferred xanthans should have good filterability. For instance, a desirable clarified xanthan should have a flow rate of at least about 200 ml in 2 minutes at ambient temperature in a filtering laboratory test on a Baroid Filter Press using 40 psi of differential pressure and a 11 cm Whatman filter paper having a 2.7 µ pore size. An example of a suitable clarified xanthan for use in conjunction with the compositions and methods of the present invention is commercially available under the tradename "KELTROL" from CP Kelco, in various locations including Chicago, Illinois. "KELTROL BT" that is commercially available from CP Kelco is an especially suitable clarified xanthan for use in conjunction with the present invention. Another supplier of xanthan includes Rhodia in Aubervillia Cedex France. The amount of gelling agent used in the viscosified treatment fluids of the present invention may vary from about 20 lb/Mgal to about 100 1b/Mgal. In other embodiments, the amount of gelling agent included in the treatment fluids of the present invention may vary from about 30 lb/Mgal to about 80 lb/Mgal. In a preferred embodiment, about 60lb/Mgal of a gelling agent is included in an embodiment of a treatment fluid of the present invention. It should be noted that in well bores comprising BHTs of 200°F or more, 70 lbs/Mgal or more of the gelling agent may be beneficially used in a treatment fluid of the present invention.

Optionally, the gelling agents of the present invention may comprise an additional biopolymer if the use of the clarified xanthan and the biopolymer produces a desirable result, e.g., a synergistic effect. Suitable biopolymers may include polysaccharides and/or derivatives thereof. Depending on the application, one biopolymer may be more suitable than another. One of ordinary skill in the art with the benefit of this disclosure will be able to determine if a biopolymer should be included for a particular application based on, for example, the desired viscosity of the viscosified treatment fluid and the bottom hole temperature ("BHT") of the well bore.

The brine of the viscosified treatment fluids of the present invention may include those that comprise monovalent, divalent, or trivalent cations, e.g., magnesium, calcium, iron, which cations may in some concentrations and at some pH levels may cause undesirable crosslinking of a xanthan polymer. If a water source is used which contains such divalent or trivalent cations in concentrations sufficiently high to be problematic, then such divalent or trivalent salts may be removed, either by a process such as reverse osmosis, or by raising the pH of the water in order to precipitate out such divalent salts to lower the concentration of such salts in the water before the water is used. Another method would be to include a chelating agent to chemically bind the problematic ions to prevent their undesirable interactions with the xanthan. Suitable chelants include, but are not limited to, citric acid or sodium citrate. Other chelating agents also are suitable. Monovalent brines are preferred and, where used, may be of any weight. Examples of suitable brines include calcium bromide brines, zinc bromide brines, calcium chloride brines, sodium chloride brines, sodium bromide brines, potassium bromide brines, potassium chloride brines, sodium nitrate brines, potassium formate brines, mixtures thereof, and the like. The brine chosen should be compatible with the formation and should have a sufficient density to provide the appropriate degree of well control. Additional salts may be added to a water source, e.g., to provide a brine, and a resulting viscosified treatment fluid, having a desired density. A preferred suitable brine is seawater. The gelling agents of the present invention may be used successfully with seawater.

In certain embodiments, the viscosified treatment fluids of the present invention also may comprise salts, pH control additives, surfactants, breakers, bactericides, crosslinkers, fluid loss control additives, stabilizers, chelants, scale inhibitors, combinations thereof, or the like.

Salts may be included in the viscosified treatment fluids of the present invention for many purposes, including, densifying the fluid to achieve a chosen density. Salts also may be included for reasons related to compatibility of the viscosified treatment fluid with the formation and formation fluids. To determine whether a salt may be beneficially used for compatibility purposes, a compatibility test may be performed to identify potential compatibility problems. From such tests, one of ordinary skill in the art with the benefit of this disclosure will be able to determine whether a and what salt should be included in a viscosified treatment fluid of the present invention. Suitable salts include, but are not limited to, calcium bromide, zinc bromide, calcium chloride, sodium chloride, sodium bromide, potassium bromide, potassium chloride, sodium nitrate, potassium formate, mixtures thereof, and the like. The amount of salt that should be added should be the amount needed to take the viscosified treatment fluid to the required density, taking into consideration the crystallization temperature of the brine, e.g., the temperature at which the salt precipitates from the brine as the temperature drops.

Suitable pH control additives, in certain embodiments, may comprise bases, chelating agents, acids, or combinations of chelating agents and acids or bases. A pH control additive may be necessary to maintain the pH of the treatment fluid at a desired level, e.g., to improve the effectiveness of certain breakers and to reduce corrosion on any metal present in the well bore or formation, etc. In some instances, it may be beneficial to maintain the pH at neutral or above 7.

In some embodiments, the pH control additive may be a chelating agent. When added to the treatment fluids of the present invention, such a chelating agent may chelate any dissolved iron (or other divalent or trivalent cation) that may be present in the water. Such chelating may prevent such ions from crosslinking the gelling agent molecules. Such crosslinking may be problematic because, *inter alia,* it may cause severe filtration problems and/or reduce the sand suspension properties of the fluid. Any suitable chelating agent may be used with the present invention. Examples of suitable chelating agents include, but are not limited to, an anhydrous form of citric acid, commercially available under the tradename "Fe-2™" Iron Sequestering Agent from Halliburton Energy Services, Inc., of Duncan, Oklahoma. Another example of a suitable chelating agent is a solution of citric acid dissolved in water, commercially available under the tradename "Fe-2A™" buffering agent from Halliburton Energy Services, Inc., of Duncan, Oklahoma. Another example of a suitable chelating agent is sodium citrate, commercially available under the tradename "FDP-S714-04" from Halliburton Energy Services, Inc. of Duncan, Oklahoma. Other chelating agents that are suitable for use with the present invention include, *inter alia,* nitrilotriacetic acid and any form of ethylene diamine tetracetic acid ("EDTA") or its salts. Generally, the chelating agent is present in an amount sufficient to prevent crosslinking of the gelling agent molecules by any free iron (or any other divalent or trivalent cation) that may be present. In one embodiment, the chelating agent may be present in an amount of from about 0.02% to about 2.0% by weight of the treatment fluid. In another embodiment, the chelating agent is present in an amount in the range of from about 0.02% to about 0.5% by weight of the treatment fluid. One of ordinary skill in the art with the benefit of this disclosure will be able to determine the proper concentration of chelating agents for a particular application.

In another embodiment, the pH control additive may be an acid. Any known acid may be suitable with the treatment fluids of the present invention. Examples of suitable acids include, *inter alia,* hydrochloric acid, acetic acid, formic acid, and citric acid.

The pH control additive also may comprise a base to elevate the pH of the viscosified treatment fluid. Generally, a base may be used to elevate the pH of the mixture to greater than or equal to about 7. Having the pH level at or above 7 may have a positive effect on a chosen breaker being used. This type of pH may also inhibit the corrosion of any metals present in the well bore or formation, such as tubing, sand screens, etc. Any known base that is compatible with the gelling agents of the present invention can be used in the viscosified treatment fluids of the present invention. Examples of suitable bases include, but are not limited to, sodium hydroxide, potassium carbonate, potassium hydroxide and sodium carbonate. An example of a suitable base is a solution of 25% sodium hydroxide commercially available from Halliburton Energy Services, Inc., of Duncan, Oklahoma, under the tradename "MO-67™" pH control agent. Another example of a suitable base solution is a solution of potassium carbonate commercially available from Halliburton Energy Services, Inc., of Duncan, Oklahoma, under the tradename "BA-40L™" buffering agent. One of ordinary skill in the art with the benefit of this disclosure will recognize the suitable bases that may be used to achieve a desired pH elevation.

In still another embodiment, the pH control additive may comprise a combination of an acid and a chelating agent or a base and a chelating agent. Such combinations may be suitable when, *inter alia,* the addition of a chelating agent (in an amount sufficient to chelate the iron present) is insufficient by itself to achieve the desired pH level.

In some embodiments, the viscosified treatment fluids of the present invention may include surfactants, e.g., to improve the compatibility of the viscosified treatment fluids of the present invention with other fluids (like any formation fluids) that may be present in the well bore. An artisan of ordinary skill with the benefit of this disclosure will be able to identify the type of surfactant as well as the appropriate concentration of surfactant to be used. Suitable surfactants may be used in a liquid or powder form. Where used, the surfactants are present in the viscosified treatment fluid in an amount sufficient to prevent incompatibility with formation fluids or well bore fluids. In an embodiment where liquid surfactants are used, the surfactants are generally present in an amount in the range of from about 0.01% to about 5.0% by volume of the viscosified treatment fluid. In one embodiment, the liquid surfactants are present in an amount in the range of from about 0.1 % to about 2.0% by volume of the viscosified treatment fluid. In embodiments where powdered surfactants are used, the surfactants may be present in an amount in the range of from about 0.001% to about 0.5% by weight of the viscosified treatment fluid. Examples of suitable surfactants are non-emulsifiers commercially available from Halliburton Energy Services, Inc., of Duncan, Oklahoma, under the tradenames "LOSURF-259™" nonionic nonemulsifier, "LOSURF-300™" nonionic surfactant, "LOSURF-357™" nonionic surfactant, and "LOSURF-400™" surfactant. Another example of a suitable surfactant is a non-emulsifier commercially available from Halliburton Energy Services, Inc., of Duncan, Oklahoma, under the tradename "NEA-96M™" Surfactant. It should be noted that it may be beneficial to add a surfactant to a viscosified treatment fluid of the present invention as that fluid is being pumped downhole to help eliminate the possibility of foaming.

In some embodiments, the viscosified treatment fluids of the present invention may contain bactericides, *inter alia,* to protect both the subterranean formation as well as the viscosified treatment fluid from attack by bacteria. Such attacks may be problematic because they may lower the viscosity of the viscosified treatment fluid, resulting in poorer performance, such as poorer sand suspension properties, for example. Any bactericides known in the art are suitable. An artisan of ordinary skill with the benefit of this disclosure will be able to identify a suitable bactericide and the proper concentration of such bactericide for a given application. Where used, such bactericides are present in an amount sufficient to destroy all bacteria that may be present. Examples of suitable bactericides include, but are not limited to, a 2,2-dibromo-3-nitrilopropionamide, commercially available under the tradename "BE-3S™" biocide from Halliburton Energy Services, Inc., of Duncan, Oklahoma, and a 2-bromo-2-nitro-1,3-propanediol commercially available under the tradename "BE-6™" biocide from Halliburton Energy Services, Inc., of Duncan, Oklahoma. In one embodiment, the bactericides are present in the viscosified treatment fluid in an amount in the range of from about 0.001% to about 0.003% by weight of the viscosified treatment fluid. Another example of a suitable bactericide is a solution of sodium hypochlorite, commercially available under the tradename "CAT-1™" chemical from Halliburton Energy Services, Inc., of Duncan, Oklahoma. In certain embodiments, such bactericides may be present in the viscosified treatment fluid in an amount in the range of from about 0.01% to about 0.1 % by volume of the viscosified treatment fluid. In certain preferred embodiments, when bactericides are used in the viscosified treatment fluids of the present invention, they are added to the viscosified treatment fluid before the gelling agent is added.

The viscosified treatment fluids of the present invention also (optionally) may comprise a suitable crosslinker to crosslink the clarified xanthan of the gelling agent in the viscosified treatment fluid. Crosslinking may be desirable at higher temperatures and/or when the sand suspension properties of a particular fluid of the present invention may need to be altered for a particular purpose. Suitable crosslinkers include, but are not limited to, boron derivatives; potassium derivatives, including but not limited to, potassium periodate or potassium iodate; ferric iron derivatives; magnesium derivatives; and the like. Any crosslinker that is compatible with the clarified xanthan in the gelling agent may be used. One of ordinary skill in the art with the benefit of this disclosure will recognize when such crosslinkers are appropriate and what particular crosslinker will be most suitable.

The viscosified treatment fluids of the present invention also may comprise breakers capable of reducing the viscosity of the viscosified treatment fluid at a desired time. Examples of such suitable breakers for viscosified treatment fluids of the present invention include, but are not limited to, sodium chlorites, hypochlorites, perborate, persulfates, peroxides, including organic peroxides. Other suitable breakers include, but are not limited to, suitable acids and peroxide breakers, as well as enzymes that may be effective in breaking xanthan. Preferred examples of peroxide breakers include tert-butyl hydroperoxide and tert-amyl hydroperoxide. A breaker may be included in a viscosified treatment fluid of the present invention in an amount and form sufficient to achieve the desired viscosity reduction at a desired time. The breaker may be formulated to provide a delayed break, if desired. For example, a suitable breaker may be encapsulated if desired. Suitable encapsulation methods are known to those skilled in the art. One suitable encapsulation method that may be used involves coating the chosen breakers with a material that will degrade when downhole so as to release the breaker when desired. Resins that may be suitable include, but are not limited to, polymeric materials that will degrade when downhole. The terms "degrade," "degradation," or "degradable" refer to both the two relatively extreme cases of hydrolytic degradation that the degradable material may undergo, i.e., heterogeneous (or bulk erosion) and homogeneous (or surface erosion), and any stage of degradation in between these two. This degradation can be a result of, *inter alia,* a chemical or thermal reaction or a reaction induced by radiation. Suitable examples include, but are not limited to, polysaccharides such as dextran or cellulose; chitins; chitosans; proteins; aliphatic polyesters; poly(lactides); poly(glycolides); poly(ε-caprolactones); poly(hydroxybutyrates); poly(anhydrides); aliphatic polycarbonates; orthoesters, poly(orthoesters); poly(amino acids); poly(ethylene oxides); and polyphosphazenes. If used, a breaker should be included in a composition of the present invention in an amount sufficient to facilitate the desired reduction in viscosity in a viscosified treatment fluid. For instance, peroxide concentrations that may be used vary from about 0.05 to about 30 gallons of peroxide per 1000 gallons of the viscosified treatment fluid.

Optionally, a viscosified treatment fluid of the present invention may contain an activator or a retarder, *inter alia,* to optimize the break rate provided by the breaker. Any known activator or retarder that is compatible with the particular breaker used is suitable for use in the present invention. Examples of such suitable activators include, but are not limited to, acid generating materials, chelated iron, copper, cobalt, and reducing sugars. Examples of suitable retarders include sodium thiosulfate and diethylene triamine. In some embodiments, the sodium thiosulfate may be used in a range of from about 1 to about 100 lbs. per 1000 gallons of viscosified treatment fluid. A preferred range may be from about 5 to about 20 lbs per 1000 gallons. An artisan of ordinary skill with the benefit of this disclosure will be able to identify a suitable activator or retarder and the proper concentration of such activator or retarder for a given application.

The viscosified treatment fluids of the present invention also may comprise suitable fluid loss control agents. Such fluid loss control agents may be particularly useful when a viscosified treatment fluid of the present invention is being used in a fracturing operation. This may be due in part to xanthan's potential to leak off into formation. Any fluid loss agent that is compatible with the viscosified treatment fluid is suitable for use in the present invention. Examples include, but are not limited to, starches, silica flour, and diesel dispersed in fluid. Another example of a suitable fluid loss control additive is one that comprises a degradable material. Suitable degradable materials include degradable polymers. Specific examples of suitable polymers include polysaccharides such as dextran or cellulose; chitins; chitosans; proteins; aliphatic polyesters; poly(lactides); poly(glycolides); poly(glycolide-co-lactides); poly(ε-caprolactones); poly(3-hydroxybutyrates); poly(3-hydroxybutyrate-co-hydroxyvalerates); poly(anhydrides); aliphatic poly(carbonates); poly(orthoesters); poly(amino acids); poly(ethylene oxides); poly(phosphazenes); derivatives thereof; or combinations thereof. If included, a fluid loss additive should be added to a viscosified treatment fluid of the present invention in an amount of about 5 to about 50 pounds per 1000 gallons of the viscosified treatment fluid. In certain preferred embodiments, the fluid loss additive may be included in an amount from about 15 to about 30 pounds per 1000 gallons of the viscosified treatment fluid. For some liquid additives like diesel, these may be included in an amount from about 1% to about 20% by volume; in some preferred embodiments, these may be included in an amount from about 3% to about 10% by volume.

If in a particular application a chosen viscosified treatment fluid is experiencing a viscosity degradation a stabilizer might be useful and can be included in the fluid. One example of a situation where a stabilizer might be beneficial is where the BHT of the well bore is sufficient by itself to break the viscosified treatment fluid with the use of a breaker. Suitable stabilizers include, but are not limited to, sodium thiosulfate. Such stabilizers may be useful when the viscosified treatment fluids of the present invention are utilized in a subterranean formation having a temperature above about 150°F. If included, a stabilizer may be added in an amount of from about 1 lb to about 50 lb per 1000 gal of viscosified treatment fluid. In other embodiments, a stabilizer may be included in an amount of from about 5 to about 20 lb per 1000 gal of viscosified treatment fluid.

Scale inhibitors may be added to the viscosified treatment fluids of the present invention, for example, when a viscosified treatment fluid of the present invention is not particularly compatible with the formation waters in the formation in which it is being used. Any scale inhibitor that is compatible with the viscosified treatment fluid in which it will be used in suitable for use in the present invention. An example of a preferred scale inhibitor is "LP55" from Halliburton Energy Services in Duncan, Oklahoma. Another example of a preferred scale inhibitor is "FDP-S660-02" available from Halliburton Energy Services in Duncan, Oklahoma. If used, a scale inhibitor should be included in an amount effective to inhibit scale formation. Suitable amounts of scale inhibitors to include in the viscosified treatment fluids of the present invention may range from about 0.05 to 10 gallons per about 1000 gallons of the viscosified treatment fluid, more preferably from about 0.1 to 2 gallons per about 1000 gallons of the viscosified treatment fluid.

Any particulates such as proppant and/or gravel that are commonly used in subterranean operations may be used successfully in conjunction with the compositions and methods of the present invention. For example, resin and/or tackifier coated particulates may be suitable.

In one embodiment, the present invention provides a method of making a viscosified treatment fluid comprising the steps of: providing a brine; filtering the brine through a filter; dispersing a gelling agent that comprises a clarified xanthan into the brine with adequate sheer to fully disperse the gelling agent therein to form a brine and gelling agent mixture; mixing the brine and gelling agent mixture; allowing the clarified xanthan to fully hydrate in the brine and gelling agent mixture to form a viscosified treatment fluid; and filtering the viscosified treatment fluid. In a preferred embodiment, a viscosified treatment fluid of the present invention may be prepared according to the following process: providing a brine having a suitable density; adding optional chemical such as biocides, chelating agents, pH control agents, and the like; filtering the brine through a 2 µ filter or a finer filter; dispersing the gelling agent comprising a clarified xanthan into the brine with adequate sheer to fully disperse polymer therein; mixing the fluid until the clarified xanthan is fully hydrated; shearing the viscosified treatment fluid to fully disperse any microglobs of xanthan polymer (e.g., a relatively small agglomeration of unhydrated xanthan polymer at least partially surrounded by a dense layer of at least partially hydrated xanthan polymer) that have not fully dispersed; filtering the fluid; and adding any additional optional ingredients including surfactants, breakers, activators, retarders, and the like.

In one embodiment, the present invention provides a method of treating a portion of a subterranean formation comprising the steps of: providing a viscosified treatment fluid that comprises a brine and a gelling agent that comprises a clarified xanthan; and treating the portion of the subterranean formation.

In another embodiment, the present invention provides a method of treating a portion of a subterranean formation comprising: providing a viscosified treatment fluid that comprises seawater and a gelling agent that comprises a clarified xanthan; and treating the portion of the subterranean formation.

The viscosified treatment fluids of the present invention are useful in gravel packing operations. In an example of such an embodiment, the present invention provides a method of placing a gravel pack in a portion of a subterranean formation comprising: providing a viscosified gravel pack fluid that comprises gravel, a brine and a gelling agent that comprises a clarified xanthan; and contacting the portion of the subterranean formation with the viscosified gravel pack fluid so as to place a gravel pack in or near a portion of the subterranean formation.

The viscosified treatment fluids of the present invention may be useful in subterranean fracturing operations. In one embodiment, the present invention provides a method of fracturing a portion of a subterranean formation comprising: providing a viscosified fracturing fluid that comprises a brine and a gelling agent that comprises a clarified xanthan; and contacting the portion of the subterranean formation with the viscosified fracturing fluid at a sufficient pressure to create or enhance at least one fracture in the subterranean formation.

In another embodiment, the present invention provides a method of producing hydrocarbons from a subterranean formation comprising using a viscosified treatment fluid that comprises a brine and a gelling agent that comprises a clarified xanthan in a completion or a servicing operation.

In another embodiment, the present invention provides a method of producing hydrocarbons from a subterranean formation comprising using a viscosified treatment fluid that comprises a brine and a gelling agent that comprises a clarified xanthan in a completion or a servicing operation, and the subterranean formation has a bottom hole temperature of from about 30°F to about 300°F.

In another embodiment, the present invention provides a viscosified treatment fluid comprising seawater and a gelling agent that comprises a clarified xanthan.

In another embodiment, the present invention provides a subterranean treatment fluid gelling agent that comprises a clarified xanthan.

To facilitate a better understanding of the present invention, the following examples of some of the preferred embodiments are given. In no way should such examples be read to limit, or define, the scope of the invention.

### EXAMPLES

### Example 1. 9.7 ppg Seawater-Based Clarified Xanthan Viscosified Treatment Fluid With Salt Added

**Table No. 1: Fluid Recipe, 9.7 ppg Clarified Xanthan Viscosified Treatement Fluid (1,000 gallon batch)**

| **Recipe No. 1** |
|---|
| **Seawater Recipe (KCI/NaNO**_{**3**} |
| 882 gal. Seawater (S.G. 1.02) |
| 0.15 lb BE-3S Bactericide |
| 0.15 lb BE-6 Bactericide |
| 12 lb FDP-S714-04 |
| 1969.8 lb KCl |
| 210 lb NaNO3 |
| 60 lb Gelling Agent Comprising Clarified Xanthan |
| 3 gal. BA-40L pH Control Agent |
| 20 gal. NEA-96M Surfactant |

| |
|---|
| **Break Test @140°F For Recipe No. 1 Shown in Table 1** |
| **Breaker: SP Breaker, lb./Mgal.** |

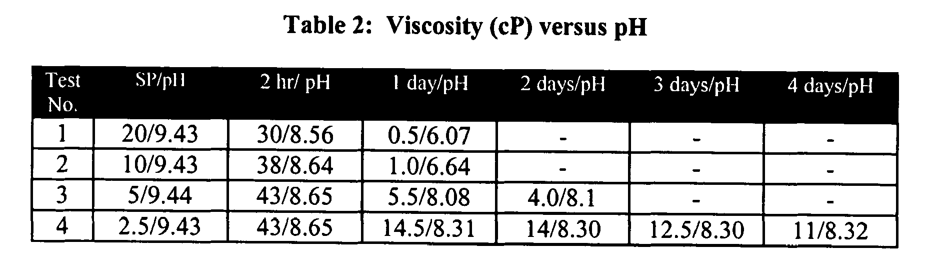

**Table 3: Fluid Recipe No. 2, 9.7 ppg Clarified Xanthan Viscosified Treatment Fluid (1,000 gallon batch)**

| **Recipe No. 2** |
|---|
| **Seawater Recipe** **(NaNO3)** |
| 882 gal. Seawater (S.G.1.02) |
| 0.15 lb BE-3S Bactericide |
| 0.15 lb Be-6 Bactericide |
| 12 lb FDP-S714-04 |
| 2174 lb NaNO₃ |
| 60 lb. Gelling Agent Comprising Claridied Xanthan |
| 3 gal. BA-40L pH Control Agent |
| 20 gal. NEA-96M Surfactant |

| |
|---|
| **Break Test @ 125°F For Recipe No. 2 : 9.7 ppg Seawater-Based Clarified Xanthan Viscosified Treatment Fluid with NaNO**_{**3**} **Salt Breaker: SP Breaker, lb./ Mgal.** |

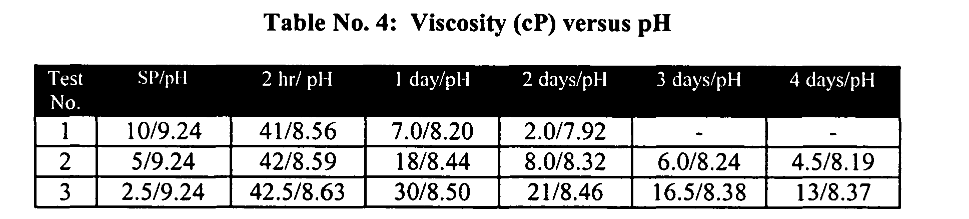

To prepare these samples, 882 ml of seawater was added to a 40 oz. Waring blender jar. The blender jar was then placed on the blending apparatus and the speed was set so that a vortex of about 1" depth was formed. The additives were then measured and adding in the following order: bactericides, chelating agent, salts, and buffer agents. The mixture was mixed for 10 minutes and then the blender was turned off. A 1000 ml Buchner funnel having a 2.7µ filter paper in the sidearm vacuum flask was then inserted. Using a vacuum hose, the sidearm vacuum flask was then attached to either a vacuum pump of a faucet aspirator. The brine water was then filtered through the Buchner funnel using the vacuum pump. The vacuum pump was turned off after all of the brine mixture passed through the filter paper. The filtered brine mixture was then poured into a clean 40 oz Waring blender jar. The blender was set at a speed such that a vortex of about 1" was formed. The desired amount of the gelling agent was then added to the brine mixture and the fluid was mixed for 30 minutes at room temperature to form a viscosified treatment fluid. The gel temperature, pH, and viscosity were then measured and recorded. The blender jar was then sealed and the viscosified treatment fluid was sheared for about 2 minutes at a high rpm using an electric powerstate preset at 110% connected to the Waring Blender. The resultant sheared gel was then filtered through a 10 µ Whatman filter paper using a filter press system. The filtered gel was then collected. Any surfactant and breakers were then added.

As can be seen from the preceding examples, both the formation of and then the breaking of the viscosity of a viscosified treatment fluid comprising a gelling agent that comprises clarified xanthan can be controlled.

Therefore, the present invention is well adapted to carry out the objects and attain the ends and advantages mentioned as well as those that are inherent therein. While numerous changes may be made by those skilled in the art, such changes are encompassed within the spirit of this invention as defined by the appended claims.

## Claims

1. A method of treating a portion of a subterranean formation comprising the steps of:
providing a viscosified treatment fluid that comprises a brine and a gelling agent that comprises a clarified xanthan; and
treating the portion of the subterranean formation.

2. The method of claim 1 wherein the brine is seawater.

3. The method of claim 1 wherein the viscosified treatment fluid has a density of about 8.3 pounds per gallon to about 19.3 pounds per gallon.

4. The method of claim 1 wherein the portion of the subterranean formation comprises a temperature of from about 30°F to about 300°F.

5. The method of claim 1 wherein the gelling agent is included in the viscosified treatment fluid is an amount from about 20 lbs to about 100 lbs per 1000 gallons of the viscosified treatment fluid.

6. The method of claim 1 wherein the gelling agent comprises a biopolymer.

7. The method of claim 1 wherein the brine is a calcium bromide brine, zinc bromide brine, calcium chloride brine, sodium chloride brine, sodium bromide brine, potassium bromide brine, potassium chloride brine, sodium nitrate brine, potassium formate brine, or a mixture thereof.

8. The method of claim 1 wherein the viscosified treatment fluid further comprises a salt, a pH control additive, a surfactant, a breaker, a bactericide, a crosslinker, a fluid loss control agent, a stabilizer, a chelant, a scale inhibitor, or a combination thereof.

9. The method of claim 8 wherein the salt is calcium bromide, zinc bromide, calcium chloride, sodium chloride, sodium bromide, potassium bromide, potassium chloride, sodium nitrate, potassium formate, or a mixture thereof.

10. The method of claim 8 wherein the pH control additive is a base, a chelating agent, an acid, a combination of a base and a chelating agent, or a combination of an acid and a chelating agent.

11. The method of claim 8 wherein the surfactant is present in an amount in the range of from about 0.1% to about 5% by volume of the viscosified treatment fluid.

12. The method of claim 8 wherein the bactericide is present in an amount from about 0.001% to about 0.1% by volume of the viscosified treatment fluid.

13. The method of claim 8 wherein the crosslinker comprises a boron derivative, a potassium derivative, a ferric iron derivative, or a magnesium derivative.

14. The method of claim 8 wherein the breaker is an acid, an acid generating material, a peroxide, or an enzyme.

15. The method of claim 8 wherein the breaker is encapsulated and comprises a coating.

16. The method of claim 15 wherein the coating comprises a degradable material.

17. The method of claim 16 wherein the degradable material is a polysaccharide, a chitin, a chitosan, a protein, an aliphatic poly(ester), a poly(lactide), a poly(glycolide), a poly(ε-caprolactone), a poly(hydroxybutyrate), a poly(anhydride), an aliphatic polycarbonate, an orthoester, a poly(orthoester), a poly(amino acid), a poly(ethylene oxide), a poly(phosphazene), a derivative thereof, or a combination thereof.

18. The method of claim 8 wherein the fluid loss control agent is included in an amount of from about 5 lbs to about 50 lbs per 1000 gals of the viscosified treatment fluid.

19. The method of claim 8 wherein the fluid loss control agent comprises silica flour, a starch, diesel, or a degradable material.

20. The method of claim 1 wherein the viscosified treatment fluid further comprises a breaker and an activator or a retarder.

21. A method of treating a portion of a subterranean formation comprising:
providing a viscosified treatment fluid that comprises seawater and a gelling agent that comprises a clarified xanthan; and
treating the portion of the subterranean formation.

22. The method of claim 21 wherein the portion of the subterranean formation has a temperature of from about 30°F to about 300°F.

23. The method of claim 21 wherein the viscosified treatment fluid has the capability of suspending particulates under static conditions for more than about 2 hours at a bottom hole temperature of from about 30°F to about 300°F.

24. The method of claim 21 wherein the viscosified treatment fluid has a density of about 8.3 ppg to about 19.2 ppg.

25. The method of claim 21 wherein the gelling agent is included in the viscosified treatment fluid in an amount of from about 20 lb/Mgal to about 100 lb/Mgal.

26. The method of claim 21 wherein the gelling agent further comprises a biopolymer.

27. The method of claim 26 wherein the biopolymer is a polysaccharide or a derivative thereof.

28. The method of claim 21 wherein the brine comprises monovalent, divalent, or trivalent ions.

29. The method of claim 21 wherein the brine is a calcium bromide brine, a zinc bromide brine, a calcium chloride brine, a sodium chloride brine, a sodium bromide brine, a potassium bromide brine, a potassium chloride brine, a sodium nitrate brine, a potassium formate brine, or a mixture thereof.

30. The method of claim 21 wherein the viscosified treatment fluid further comprises a salt, a pH control additive, a surfactant, a breaker, a bactericide, a crosslinker, a fluid loss control additive, a stabilizer, a chelant, a scale inhibitor, or a combination thereof.

31. The method of claim 30 wherein the salt is calcium bromide, zinc bromide, calcium chloride, sodium chloride, sodium bromide, potassium bromide, potassium chloride, sodium nitrate, potassium formate, a mixture thereof.

32. The method of claim 30 wherein the pH control additive is a base, chelating agent, acid, a combination of an acid and a chelating agent, or a combination of a base and a chelating agent.

33. The method of claim 30 wherein the surfactant is present in an amount to prevent incompatibility with the viscosified treatment fluid and formation fluids or well fluids.

34. The method of claim 30 wherein the breaker comprises a sodium chlorite, a hypochlorite, a perborate, a persulfate, a peroxide, or an enzyme.

35. The method of claim 30 wherein at least a portion of the breaker is encapsulated with an encapsulating coating.

36. The method of claim 35 wherein the coating comprises a degradable material.

37. The method of claim 36 wherein the degradable material is a polysaccharide, a chitin, a chitosan, a protein, an aliphatic poly(ester), a poly(lactide), a poly(glycolide), a poly(ε-caprolactone), a poly(hydroxybutyrate), a poly(anhydride), an aliphatic polycarbonate, an orthoester, a poly(orthoester), a poly(amino acid), a poly(ethylene oxide), a poly(phosphazene), a derivative thereof, or a combination thereof.

38. A method of placing a gravel pack in a portion of a subterranean formation comprising:
providing a viscosified gravel pack fluid that comprises gravel, a brine and a gelling agent that comprises a clarified xanthan; and
contacting the portion of the subterranean formation with the viscosified gravel pack fluid so as to place a gravel pack in or near a portion of the subterranean formation.

39. The method of claim 38 wherein the brine is seawater.

40. The method of claim 38 wherein the viscosified treatment fluid has a density of about 8.3 pounds per gallon to about 19.3 pounds per gallon.

41. The method of claim 38 wherein the portion of the subterranean formation comprises a temperature of from about 30°F to about 300°F.

42. The method of claim 38 wherein the gelling agent comprises a biopolymer.

43. The method of claim 38 wherein the viscosified treatment fluid further comprises a salt, a pH control additive, a surfactant, a breaker, a bactericide, a crosslinker, a fluid loss control agent, a stabilizer, a chelant, a scale inhibitor, or a combination thereof.

44. A method of fracturing a portion of a subterranean formation comprising:
providing a viscosified fracturing fluid that comprises a brine and a gelling agent that comprises a clarified xanthan; and
contacting the portion of the subterranean formation with the viscosified fracturing fluid at a sufficient pressure to create or enhance at least one fracture in the subterranean formation.

45. The method of claim 44 wherein the brine is seawater.

46. The method of claim 44 wherein the viscosified treatment fluid has a density of about 8.3 pounds per gallon to about 19.3 pounds per gallon.

47. The method of claim 44 wherein the portion of the subterranean formation comprises a temperature of from about 30°F to about 300°F.

48. The method of claim 44 wherein the gelling agent comprises a biopolymer.

49. The method of claim 44 wherein the viscosified treatment fluid further comprises a salt, a pH control additive, a surfactant, a breaker, a bactericide, a crosslinker, a fluid loss control agent, a stabilizer, a chelant, a scale inhibitor, or a combination thereof.

50. A method of producing hydrocarbons from a subterranean formation comprising using a viscosified treatment fluid that comprises a brine and a gelling agent that comprises a clarified xanthan in a completion or a servicing operation.

51. The method of claim 50 wherein the brine is seawater.

52. The method of claim 50 wherein the viscosified treatment fluid has a density of about 8.3 pounds per gallon to about 19.3 pounds per gallon.

53. A method of producing hydrocarbons from a subterranean formation comprising using a viscosified treatment fluid that comprises a brine and a gelling agent that comprises a clarified xanthan in a completion or a servicing operation, and the subterranean formation has a bottom hole temperature of from about 30°F to about 300°F.

54. The method of claim 53 wherein the brine is seawater.

55. The method of claim 53 wherein the viscosified treatment fluid has a density of about 8.3 pounds per gallon to about 19.3 pounds per gallon.

56. The method of claim 53 wherein the gelling agent comprises a biopolymer.

57. The method of claim 56 wherein the biopolymer comprises a polysaccharide and/or a derivative thereof.

58. A viscosified treatment fluid comprising seawater and a gelling agent that comprises a clarified xanthan.

59. The treatment fluid of claim 58 wherein viscosified treatment fluid has the capability of suspending particulates under static conditions for more than about 2 hours at a bottom hole temperature of from about 30°F to about 300°F.

60. The treatment fluid of claim 58 wherein the viscosified treatment fluid has a density of about 8.3 ppg to about 19.2 ppg.

61. The treatment fluid of claim 58 wherein the gelling agent is included in the viscosified treatment fluid in an amount of from about 20 lb/Mgal to about 100 lb/Mgal.

62. The treatment fluid of claim 58 wherein the gelling agent further comprises a biopolymer.

63. The treatment fluid of claim 62 wherein the biopolymer comprises a polysaccharide or a derivative thereof.

64. The treatment fluid of claim 58 wherein the brine comprises monovalent, divalent, or trivalent ions.

65. The treatment fluid of claim 58 wherein the brine is a calcium bromide brine, a zinc bromide brine, a calcium chloride brine, a sodium chloride brine, a sodium bromide brine, a potassium bromide brine, a potassium chloride brine, a sodium nitrate brine, a potassium formate brine, or a mixture thereof.

66. The treatment fluid of claim 58 wherein the viscosified treatment fluid further comprises a salt, a pH control additive, a surfactant, a breaker, a bactericide, a crosslinker, a fluid loss control additive, a stabilizer, a chelant, a scale inhibitor, or a combination thereof.

67. The treatment fluid of claim 66 wherein the salt is calcium bromide, zinc bromide, calcium chloride, sodium chloride, sodium bromide, potassium bromide, potassium chloride, sodium nitrate, potassium formate, a mixture thereof.

68. The treatment fluid of claim 66 wherein the pH control additive is a base, chelating agent, acid, a combination of an acid and a chelating agent, or a combination of a base and a chelating agent.

69. The treatment fluid of claim 66 wherein the surfactant is present in an amount to prevent incompatibility with the viscosified treatment fluid and formation fluids or well fluids.

70. The treatment fluid of claim 66 wherein the breaker comprises a sodium chlorite, a hypochlorite, a perborate, a persulfate, a peroxide, or an enzyme.

71. The treatment fluid of claim 66 wherein at least a portion of the breaker is encapsulated with an encapsulating coating.

72. The treatment fluid of claim 71 wherein the coating comprises a degradable material.

73. The treatment fluid of claim 72 wherein the degradable material is a polysaccharide, a chitin, a chitosan, a protein, an aliphatic poly(ester), a poly(lactide), a poly(glycolide), a poly(ε-caprolactone), a poly(hydroxybutyrate), a poly(anhydride), an aliphatic polycarbonate, an orthoester, a poly(orthoester), a poly(amino acid), a poly(ethylene oxide), a poly(phosphazene), a derivative thereof, or a combination thereof.

74. A subterranean treatment fluid gelling agent that comprises a clarified xanthan.

75. The gelling agent of claim 74 further comprising a biopolymer.

76. The gelling agent of claim 75 wherein the biopolymer comprises a polysaccharide or a derivative thereof.

77. A method of making a viscosified treatment fluid comprising the steps of:
providing a brine;
filtering the brine through a filter;
dispersing a gelling agent that comprises a clarified xanthan into the brine with adequate sheer to fully disperse the gelling agent therein to form a brine and gelling agent mixture;
mixing the brine and gelling agent mixture;
allowing the clarified xanthan to fully hydrate in the brine and gelling agent mixture to form a viscosified treatment fluid; and
filtering the viscosified treatment fluid.
